# DEMANDE DE BREVET EUROPEEN

(11) **EP 2 636 884 A1**
(43) Date de publication de la demande: **11.09.2013**
(21) Numéro de dépôt: 12305273.0
(22) Date de dépôt: 06.03.2012
(51) Int. Cl.: F03B 3/12, F03B 17/06, F03D 3/02, F03D 7/06

(54) **Dispositif de conversion de l'énergie cinétique d'un fluide en énergie mécanique, à régulation de la puissance captée**

(71) Demandeur: Parrino, Georges, 66530 Claira (FR)
(72) Inventeur: Parrino, Georges, 66530 Claira (FR)
(74) Mandataire: Pontet Allano & Associes

(57) **Abrégé**

La présente invention concerne un dispositif de conversion de l'énergie cinétique d'un fluide, tel que l'air ou l'eau, en énergie mécanique de rotation par un rotor moteur (102) ayant un axe de rotation (X) transversal à une direction d'écoulement du fluide. Un rotor régulateur (103), placé au milieu du rotor moteur (102), permet par un effet de dynamique des fluides, de réguler la puissance captée par le rotor moteur (102). Le rotor régulateur (103) est entraîné en rotation, dans le sens inverse à celui du rotor moteur (102), par un rotor de commande (104) placé à une extrémité axiale du rotor moteur (102).

## Description

### Domaine technique

La présente invention concerne un dispositif de conversion de l'énergie cinétique d'un fluide en énergie mécanique, à régulation de la puissance captée.

Le domaine de l'invention est plus particulièrement, mais de manière non limitative, celui des dispositifs de conversion de l'énergie cinétique tels que les éoliennes et les hydroliennes.

### Etat de la technique antérieure

On connaît différents dispositifs de conversion de l'énergie cinétique d'un fluide en énergie mécanique.

On connaît en particulier les éoliennes et les machines hydrauliques. Dans un fluide en écoulement, on place une machine tournante qui intercepte une veine de l'écoulement et convertit une partie de l'énergie cinétique du fluide formant cette veine, en une énergie mécanique de rotation d'un rotor de la machine.

On appellera ci-après « écoulement du fluide » le mouvement du fluide considéré suffisamment en amont de la machine pour ne pas être influencé par la présence de cette machine.

On connaît d'après le US 264,219, un dispositif convertissant l'énergie cinétique d'un fluide en énergie mécanique par un rotor moteur ayant un axe de rotation transversal à une direction d'écoulement du fluide.

De tels dispositifs ont l'avantage d'être peu coûteux, peu encombrants, de pouvoir fonctionner même avec une faible vitesse d'écoulement, et de générer un couple élevé.

En particulier, le dispositif fonctionne même lorsque la direction d'écoulement du fluide varie dans un plan transversal à l'axe de rotation. C'est notamment le cas d'un dispositif à axe vertical, qui capte l'énergie du vent sans qu'il soit nécessaire d'orienter le dispositif en fonction de la direction du vent. Ceci permet de réaliser des dispositifs simples et peu coûteux.

Si l'énergie cinétique du fluide varie avec le temps, le dispositif risque d'être soumis à des puissances susceptibles de le dégrader. Or la disposition fixe du rotor ne permet pas de le déplacer pour réguler la puissance captée.

Différents dispositifs ont été conçus pour réguler la puissance captée. On connaît notamment le FR 576.980 qui prévoit de disposer une couronne directrice autour d'un rotor moteur. La couronne directrice comporte un ensemble de volets disposés autour du rotor moteur. En orientant les volets par rapport à la direction d'écoulement du fluide, il est possible de réguler la puissance captée par le rotor moteur. La couronne directrice permet donc de diminuer la puissance captée quand c'est nécessaire. La couronne directrice ayant un diamètre plus grand que le rotor moteur, elle peut aussi permettre de capter une veine de fluide de plus grande section, et donc davantage d'énergie cinétique que ce qui serait permis par le rotor moteur seul.

C'est ce principe qu'utilisent également les US 5,503,530, WO 98/07981, WO 2006/089425, EP 2 075 460 A2, et EP 2 075 460.

On connaît également le document US 4,236,866 qui enseigne le montage de deux rotors moteurs concentriques, placés l'un dans l'autre et tournant en sens inverse pour augmenter la puissance captée par le dispositif.

Toutefois, l'énergie cinétique du fluide est susceptible de varier fortement avec le temps, ou de subir des à-coups. Les dispositifs existants ne permettent un fonctionnement optimisé que pour des variations modérées de l'énergie cinétique du fluide.

Le but de la présente invention est de proposer un dispositif de conversion d'énergie cinétique permettant un fonctionnement optimisé sur une large plage de variation de l'énergie cinétique du fluide.

Un autre but de l'invention est de proposer un dispositif de conversion d'énergie cinétique à régulation simple et peu coûteux.

### Exposé de l'invention

Cet objectif est atteint avec un dispositif de conversion de l'énergie cinétique d'un fluide en énergie mécanique de rotation par un rotor moteur ayant un axe de rotation transversal à une direction d'écoulement du fluide, et des pales motrices recevant l'action du fluide, **caractérisé en ce qu'**il comporte en outre :
- un rotor régulateur pour la régulation de la puissance par un effet d'interaction dynamique entre le fluide entraînant le rotor moteur et le fluide entraîné par le rotor régulateur, le rotor régulateur régulant la puissance captée par le rotor moteur, et étant placé à l'intérieur du rotor moteur, le rotor régulateur présentant des pales régulatrices qui interagissent avec le fluide,
- un rotor de commande placé à une extrémité axiale du rotor moteur et lié en rotation au rotor régulateur pour entraîner le rotor régulateur en rotation, en sens inverse du rotor moteur.
le rotor régulateur et le rotor de commande étant coaxiaux au rotor moteur.

Le rotor régulateur étant lié au rotor de commande, sa vitesse de rotation est liée à la vitesse d'écoulement du fluide. En cas d'une faible vitesse d'écoulement du fluide, le rotor régulateur ne tourne pas ou très peu. Le rotor moteur convertit alors l'essentiel de l'énergie cinétique en énergie mécanique.

Lorsque l'écoulement du fluide est plus rapide, tous les rotors sont en rotation. Le fluide entraîné par le rotor régulateur tend à contrarier l'action du fluide entraînant le rotor moteur, réduisant ainsi l'efficacité de la conversion de l'énergie cinétique de l'écoulement en énergie mécanique de rotation du rotor moteur.

Le rotor de commande étant entraîné par l'écoulement du fluide, la vitesse du rotor régulateur est liée à la vitesse d'écoulement du fluide. Lorsque l'écoulement est rapide, le rotor régulateur tourne vite, et le fluide qu'il entraîne contrarie fortement la rotation du rotor moteur. Ainsi plus le rotor régulateur tourne vite, plus la proportion de l'énergie cinétique du fluide convertie en énergie mécanique de rotation est faible. Le rotor de commande tend donc à réguler la puissance en fonction de la vitesse de l'écoulement du fluide, et ce de manière autonome.

Dans une version avantageuse, le rotor moteur comporte des espaces inter-pales qui sont en communication de fluide avec des espaces inter-pales du rotor régulateur, de préférence sur tout le pourtour du rotor régulateur et/ou sur toute la longueur axiale du rotor régulateur et/ou du rotor moteur.

Dans un mode de réalisation avantageux, les rotors ont une forme sensiblement cylindrique.

Suivant une autre particularité de l'invention, les pales motrices et les pales régulatrices, respectivement du rotor moteur et du rotor régulateur, ont une première courbure opposée à une deuxième courbure présentée par des pales du rotor de commande.

Dans une version avantageuse, les pales motrices et les pales régulatrices sont inclinées dans un même sens par rapport à l'axe de rotation. Cette disposition relative des pales motrices et des pales régulatrices, tend à minimiser les nuisances sonores pouvant être générées par l'éolienne. L'inclinaison précitée d'une pale s'observe depuis l'extérieur du rotor en regardant le long d'un rayon traversant la pale.

Selon un mode de réalisation particulier, l'axe de rotation est vertical pour la captation d'un écoulement sensiblement horizontal.

Dans un mode de mise en oeuvre particulièrement avantageux, le dispositif suivant l'invention comporte un générateur asynchrone entraîné en rotation par le rotor moteur pour convertir l'énergie mécanique de rotation en énergie électrique. L'utilisation d'un générateur asynchrone permet au dispositif de produire une énergie électrique directement exploitable, ou ne nécessitant que des appareils peu coûteux pour la rendre directement exploitable.

Suivant une autre particularité avantageuse de l'invention, le fluide est de l'eau ou de l'air. Le dispositif selon l'invention peut être utilisé comme éolienne, ou comme turbine hydraulique.

Dans un mode de mise en oeuvre avantageux, les rotors sont placés dans un stator comportant au moins une première bouche d'entrée et au moins une bouche de sortie.

L'utilisation d'une bouche d'entrée permet de réaliser une admission forcée où l'écoulement du fluide est capté sur une surface plus grande que la surface de la silhouette des rotors dans un plan perpendiculaire à la direction d'écoulement du fluide. L'utilisation d'une bouche d'entrée permet en outre de masquer au moins en partie les pales allant en sens inverse de la circulation du fluide, et donc d'améliorer le rendement du dispositif.

L'utilisation d'une bouche de sortie peut permettre de favoriser l'évacuation du fluide, notamment pas effet d'aspiration lié à l'écoulement du fluide.

Suivant une autre particularité avantageuse de l'invention, le pourtour du stator comporte plusieurs bouches étant d'entrée ou de sortie en fonction de la direction d'écoulement du fluide.

Selon encore une autre particularité avantageuse de l'invention, la bouche de sortie est de section constante ou de section croissante dans le sens axifuge.

Suivant une autre particularité de l'invention, la première bouche d'entrée est de section croissante dans le sens axifuge.

Dans un mode de réalisation avantageux, le stator comporte au moins un cache permettant d'occulter une partie de la bouche d'entrée en regard du rotor moteur et/ou en regard du rotor de commande. Le cache permet notamment la régulation de la puissance du rotor moteur et du rotor de commande l'un par rapport à l'autre. Le cache peut également permettre de masquer au moins en partie les pales lorsqu'elles vont en sens inverse de la circulation du fluide, et donc d'améliorer le rendement du dispositif.

Dans un mode de mise en oeuvre particulièrement avantageux, le stator comporte une deuxième bouche d'entrée placée en arrière de la première bouche d'entrée relativement au sens de rotation du rotor moteur.

Le dispositif selon l'invention peut comporter en outre pour la première bouche d'entrée et la deuxième bouche d'entrée, respectivement une première aube arrière et une deuxième aube arrière relativement au sens de rotation du rotor moteur, les première et deuxième aubes arrière comportant respectivement un premier déflecteur et un deuxième déflecteur à leur extrémité adjacente au rotor moteur, les premier et deuxième déflecteurs réduisant la section des respectivement première et deuxième bouches d'entrée dans le sens axipète.

### Description des figures et modes de réalisation

D'autres particularités et avantages de l'invention apparaîtront à la lecture de la description détaillée de mises en oeuvre et de modes de réalisation nullement limitatifs, et des dessins annexés suivants :
- la figure 1 est une vue en perspective avec éclaté partiel d'un premier mode de réalisation du dispositif,
- la figure 2 est une vue en perspective avec arrachement du premier mode de réalisation,
- la figure 3 est une représentation schématique en vue axiale d'une bouche d'entrée selon un deuxième mode de réalisation de l'invention,
- la figure 4 est une représentation schématique en vue axiale d'un ensemble de bouches d'entrée et de sortie du deuxième mode de réalisation,
- la figure 5 est une représentation schématique en vue de dessus d'une bouche d'entrée et d'une bouche de sortie selon un troisième mode de réalisation, et
- la figure 6 est une représentation schématique en vue de dessus d'une bouche d'entrée et d'une bouche de sortie selon un quatrième mode de réalisation.

Ces modes de réalisation n'étant nullement limitatifs, on pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

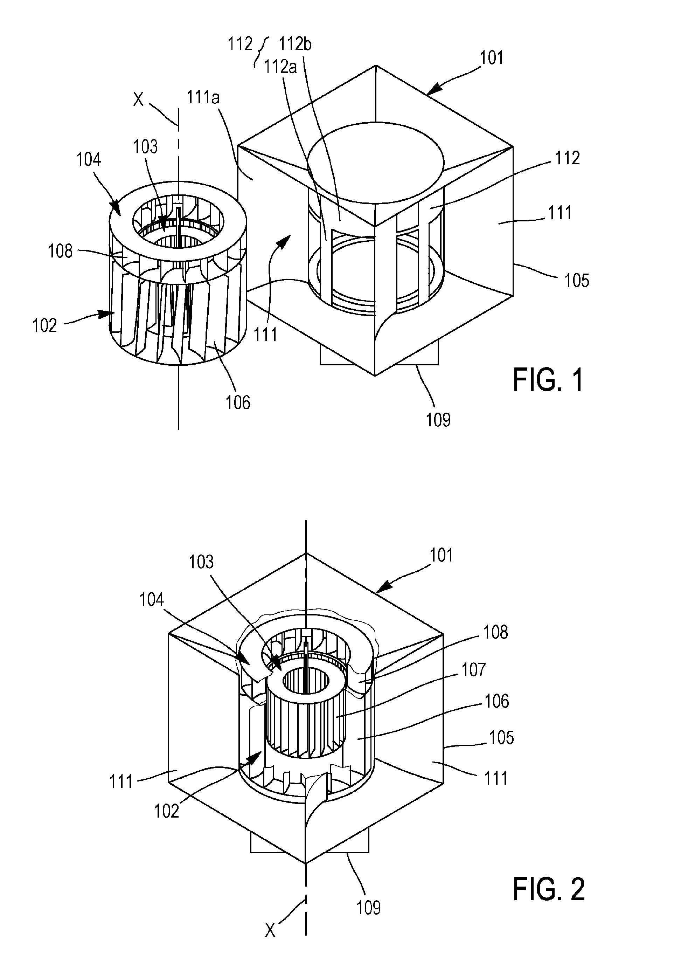

On va tout d'abord décrire, en référence aux figures 1 et 2, un premier mode de réalisation du dispositif de conversion 101 de l'énergie cinétique d'un fluide en énergie mécanique de rotation.

Le dispositif de conversion 101 comporte un rotor moteur 102 pour convertir l'énergie cinétique d'un fluide en énergie mécanique de rotation. Le rotor moteur a un axe de rotation X transversal à une direction d'écoulement du fluide.

Le dispositif de conversion 101 comporte en outre un rotor régulateur 103 pour la régulation de la puissance convertie, et un rotor de commande 104 pour entraîner le rotor régulateur en rotation. Les rotors régulateur 103 et de commande 104 sont également en rotation autour de l'axe X.

Le rotor régulateur 103 et le rotor de commande 104 sont liés en rotation l'un avec l'autre autour de l'axe X.

Le rotor moteur 102 est libre en rotation relativement au rotor régulateur 103 et relativement au rotor de commande 104.

Le rotor moteur 102 comporte des pales motrices 106 qui définissent entre elles des espaces inter-pales qui sont ouverts radialement vers l'extérieur pour permettre l'entrée du fluide alimenté par l'écoulement provenant de l'amont de la machine, et la sortie du fluide à l'aval de la machine. Les espaces inter-pales sont également ouverts radialement vers l'intérieur pour communiquer avec les espaces inter-pales du rotor régulateur.

Dans le mode de réalisation représenté, le rotor moteur 102 comporte deux jantes, espacées axialement, reliées rigidement l'une à l'autre par les pales 106. L'une des jantes est adjacente au rotor de commande 104 et présente une forme annulaire. La liaison mécanique entre le rotor de commande et le rotor de régulation passe à travers l'orifice de cette jante. L'autre jante, à savoir la jante inférieure dans l'exemple représenté, est reliée à l'arbre moteur du dispositif pour transmettre à l'arbre moteur la puissance mécanique produite par le dispositif.

Le rotor régulateur 103 comprend des pales régulatrices 107 définissant entre elles des espaces inter-pales qui sont ouverts radialement vers l'extérieur pour être en communication de fluide avec les espaces inter-pales du rotor moteur, via le côté radialement intérieur, ouvert, de ces espaces inter-pales du rotor moteur.

Dans l'exemple représenté, le rotor régulateur est annulaire. De préférence les espaces inter-pales du rotor régulateur sont également ouverts radialement vers l'intérieur et débouchent ainsi sur un volume central libre à l'intérieur du rotor régulateur. Un mât (non représenté) portant le descriptif peut avoir une région qui s'étend axialement dans ledit volume central.

Dans le mode de réalisation, le rotor régulateur comporte deux jantes qui sont reliées rigidement l'une à l'autre par les pales du rotor régulateur. La jante adjacente au rotor de commande est solidarisée avec le rotor de commande.

Le rotor de commande 104 comprend des pales de commande 108 définissant entre elles des espaces inter-pales qui sont ouverts radialement vers l'extérieur pour recevoir du fluide en provenance de l'écoulement en amont du dispositif.

Dans l'exemple représenté, le rotor régulateur est annulaire, de préférence avec des diamètres extérieur et intérieur égaux à ceux du rotor moteur, respectivement.

Il est préféré que les espaces inter-pales du rotor de commande soient ouverts radialement vers l'intérieur sur un espace libre, qui est typiquement en libre communication avec l'espace libre à l'intérieur du rotor régulateur.

Dans le mode de réalisation représenté, le rotor de commande comprend deux jantes espacées axialement et reliées l'une à l'autre par les pales 108. La jante adjacente au rotor régulateur est solidarisée avec le rotor régulateur.

Typiquement, les jantes décrites, ou certaines d'entre elles, sont planes et perpendiculaires à l'axe X.

Les rotors 102, 103, 104 sont placés dans un stator 105.
A la figure 1, l'ensemble formé par les rotors 102, 103, 104 est représenté séparément du stator pour faire apparaître tous les éléments.
A la figure 2, l'ensemble formé par les rotors 102, 103, 104 est représenté à son emplacement dans le stator. Un arrachement du stator 105, du rotor moteur 102, et du rotor de commande 104 permettent de faire apparaître le rotor régulateur 103.

Les rotors 102, 103, 104 ont une forme sensiblement cylindrique. Le rotor de commande 104 est placé à une extrémité axiale du rotor moteur 102, et le rotor régulateur 103 est placé à l'intérieur du rotor moteur 102.

Les pales motrices 106 et les pales de commande 108 sont disposées et conformées de manière à faire tourner les rotors moteur 102 et de commande 104 en sens inverse l'un de l'autre sous l'action de l'écoulement du fluide. Le rotor régulateur 103 est lié en rotation, de préférence solidairement, au rotor de commande 104 pour que le rotor régulateur 103 tourne en sens inverse du rotor moteur 102.

L'écoulement du fluide tend à accumuler du fluide et à créer une surpression sur une face arrière des pales motrices 106, relativement au sens de rotation de rotor moteur 102, et sur une face arrière des pales de commande 108, relativement au sens de rotation du rotor de commande 104. Le fluide pousse les pales et provoque une rotation du rotor autour de son axe X. Puis le fluide est évacué hors du rotor, notamment par effet de dépression en aval du dispositif de conversion, relativement à la direction d'écoulement. Plus la vitesse de l'écoulement du fluide est grande, plus la surpression et la dépression seront grandes.

La rotation du rotor régulateur 103 en sens contraire du rotor moteur 102 génère un freinage aérodynamique ou hydrodynamique (selon que le fluide est un gaz ou un liquide) du rotor moteur 102 et/ou du fluide occupant les espaces inter-pales du rotor moteur 102. Le fluide s'engouffrant dans le rotor moteur 102 tend en partie à en ressortir radialement vers l'intérieur, dans les espaces inter-pales du rotor régulateur 103. Plus l'écoulement est rapide, plus le rotor régulateur 103 tourne vite, et plus son débit de soutirage de fluide provenant du rotor moteur 102 augmente.

Les quantités de fluide échangées entre le rotor moteur 102 et le rotor régulateur 103 peuvent être grandes et générer des nuisances sonores. Il est possible de réduire fortement ces nuisances sonores, en prévoyant un diamètre extérieur du rotor régulateur 103 plus petit que le diamètre intérieur du rotor moteur 102 afin de maintenir séparés ces rotors par un espacement radial suffisant, qui peut être de quelques centimètres à quelques dizaines de centimètres selon la taille de la machine.

De préférence les pales motrices 106 sont inclinées par rapport à l'axe de rotation. De préférence les pales régulatrices 107 sont inclinées par rapport à l'axe de rotation, en particulier dans le même sens que les pales motrices 106, et de préférence selon le même angle. Cette inclinaison s'apprécie en regardant la pale depuis l'extérieur du rotor, en regardant suivant un rayon traversant la pale.

De préférence les pales motrices 106 et les pales régulatrices 107 ont une courbure dans le même sens lorsqu'elles sont vues en coupe dans un plan perpendiculaire à l'axe de rotation, tandis que les pales de commande 108, vues dans un tel plan de coupe, ont une courbure dans le sens opposé.

Dans l'exemple représenté, le dispositif de conversion comporte un générateur asynchrone 109 entraîné en rotation par le rotor moteur 102 pour convertir l'énergie mécanique de rotation dudit rotor moteur 102 en énergie électrique. Le générateur asynchrone 109 est de préférence disposé à une extrémité axiale selon l'axe X du stator 105 pour ne pas perturber l'écoulement du fluide. Le générateur asynchrone présente notamment pour avantage de ne nécessiter aucune tension d'amorçage.

Dans le premier mode de réalisation des figures 1 et 2, le stator 105 est fixe et comporte quatre bouches 111 disposées au pourtour du stator 105 et des rotors 102, 103, 104. Les quatre bouches 111 sont disposées à 90 degrés l'une de l'autre, et l'axe X est sensiblement vertical. Chaque bouche couvre un angle de 90°. Les bouches 111 sont des bouches d'entrée ou de sortie en fonction de la direction d'écoulement du fluide dans un plan transversal à l'axe de rotation X. Cette disposition est particulièrement avantageuse lorsque l'écoulement du fluide est le vent. Typiquement, une bouche 111 située face à l'amont de l'écoulement fait fonction de bouche d'entrée et la bouche 111 diamétralement opposée fait fonction de bouche de sortie.

Les bouches 111 ont une section croissante dans le sens axifuge pour permettre de capter l'écoulement du fluide sur une section plus grande que l'aire de la silhouette des rotors 102, 103, 104 dans un plan perpendiculaire au sens de l'écoulement.

Chaque bouche 111 comporte un cache 112 permettant d'occulter une partie de la bouche 111. Dans l'exemple représenté, le cache 112 comporte une partie 112a qui occulte une région du rotor moteur 102 où le fluide admis par la bouche 111 ralentirait le rotor moteur. Le cache 112 comporte en outre une partie 112b occultant une région du rotor de commande 104 où le fluide entrant ralentirait le rotor de commande 104.

Chaque bouche 111 est délimitée en particulier par une paroi arrière 111a qui est située du côté arrière de la bouche relativement au sens de rotation du rotor moteur 102. La paroi arrière 111a présente une forme de déflecteur qui dévie une partie de l'écoulement de fluide pour tendre à l'orienter dans le sens circonférentiel de rotation du rotor moteur. Dans le mode de réalisation représenté, l'écoulement ainsi dévié pénètre dans le rotor moteur par une fenêtre définie entre le bord de fuite de la paroi arrière 111a et la partie 112a du cache 112.

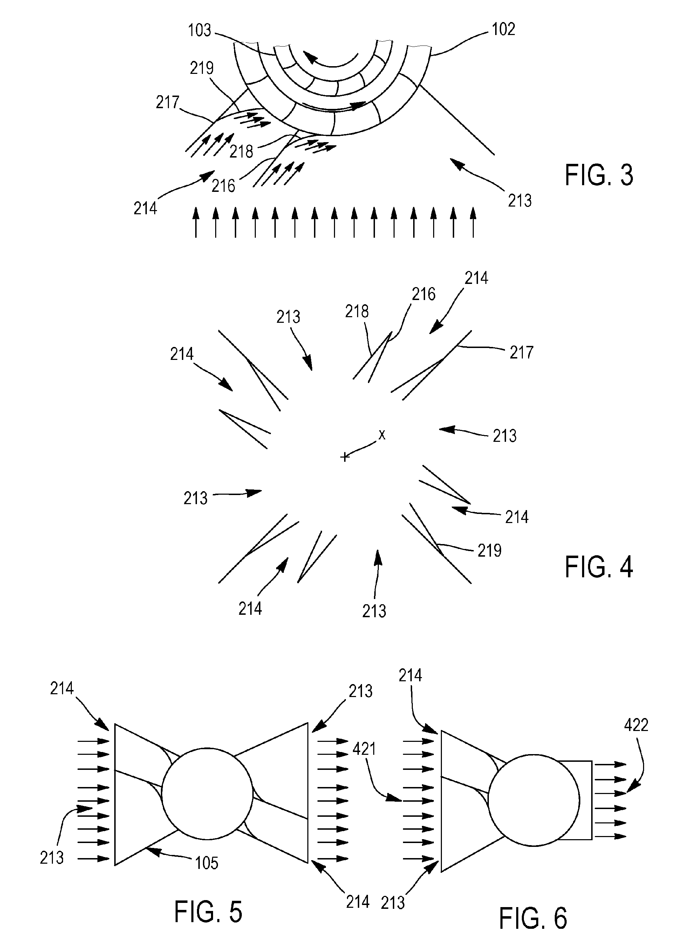

En référence à la figure 3 un second mode de réalisation du dispositif selon l'invention va être décrit uniquement en ce qu'il diffère du premier mode de réalisation.

Le stator 105 comporte une deuxième bouche 214 placée en arrière d'une première bouche 213 relativement au sens de rotation du rotor moteur 102. La première bouche 213 et la deuxième bouche 214 comprennent respectivement une première aube arrière 216 et une deuxième aube arrière 217 relativement au sens de rotation du rotor moteur. La première aube arrière 216 constitue la deuxième aube avant de la deuxième bouche 214.

Les première et deuxième aubes arrière 216, 217 comportent respectivement un premier déflecteur 218 et un deuxième déflecteur 219 à leur extrémité adjacente au rotor moteur 102. Les premier et deuxième déflecteurs 216, 217 réduisent la section des respectivement première et deuxième bouches 213, 214 dans le sens axipète. Lorsque les première et deuxième bouche 213, 214 sont des bouches d'entrée de l'écoulement du fluide, représenté par des flèches sur la figure 3, l'écoulement est canalisé pour exercer sur les pales motrices 106 une force motrice avec une forte composante dans le sens circonférentiel de rotation du rotor moteur 102. En outre les première et deuxième bouches 213, 214 permettent de capter l'écoulement du fluide sur une section plus grande que la surface correspondant à la silhouette du rotor moteur 102, et de concentrer le fluide capté par un effet d'entonnoir, et de l'orienter de façon plus efficace sur les pales du rotor moteur 102.

En référence à la figure 4, plusieurs paires de première et deuxième bouches 213, 214 peuvent être disposées de manière contiguë en périphérie du rotor moteur 102 dans un même stator 105. Chaque première bouche 213 est alors contiguë à deux deuxièmes bouches 214, et chaque deuxième bouche 214 est contiguë à deux premières bouches 213.

La première bouche 213 est délimitée par une paroi avant essentiellement radiale 213a et par le déflecteur arrière quasiment tangentiel relativement au pourtour du rotor moteur 102. La première bouche est ainsi fortement convergente vers le rotor, et elle capte la majeure partie de la veine d'air interceptée par le dispositif. La deuxième bouche est moins convergente, et de plus faible section. Elle s'étend entre une paroi avant 214a et le déflecteur 219 qui ont tous deux une orientation avec une forte composante tangentielle pour pré-orienter le fluide dans le sens de rotation du rotor moteur 102.

Les première et deuxième bouches 213, 214 sont alternativement des bouches d'entrée ou de sortie en fonction de la direction d'écoulement du fluide dans un plan transversal à l'axe de rotation X. Cette disposition est particulièrement avantageuse lorsque l'écoulement du fluide est le vent.

En référence à la figure 5 un troisième mode de réalisation du dispositif selon l'invention va être décrit uniquement en ce qu'il diffère des premier et deuxième modes de réalisation.

Dans ce troisième mode de réalisation, le stator 105 comporte deux premières bouches 213 disjointes et opposées l'une à l'autre relativement à l'axe X. Dans l'exemple de la figure 5, le stator comporte également deux deuxièmes bouches 214 disjointes et opposées l'une à l'autre relativement à l'axe X. Les premières et deuxièmes bouches 213, 214 sont de section croissante dans le sens axifuge. Les bouches 213 et 214 sont semblables à celles décrites en référence à la figure 4.

Cette disposition est particulièrement avantageuse lorsque l'écoulement du fluide est orienté selon une unique direction, et est susceptible d'évoluer dans le temps en circulant alternativement dans un sens puis dans l'autre. Le troisième mode de réalisation est en particulier adapté pour l'exploitation de l'énergie cinétique de l'eau dans une installation ou usine marémotrice.

En référence à la figure 6 un quatrième mode de réalisation du dispositif selon l'invention va être décrit uniquement en ce qu'il diffère des précédents modes de réalisation.

Dans ce quatrième mode de réalisation, le stator 105 comporte une bouche d'entrée 421 composée d'une première bouche 213 et d'une deuxième bouche 214 semblables à celles décrites précédemment. Le stator 105 comporte en outre une bouche de sortie 422 disjointe et opposée à la bouche d'entrée 421 par rapport à l'axe X. La bouche d'entrée 421 est de section croissante dans le sens axifuge, tandis que la bouche de sortie 422 est de section constante dans le sens axifuge. Cette disposition est particulièrement avantageuse lorsque l'écoulement du fluide est orienté selon une unique direction, et dans un sens unique qui n'est pas susceptible de changer dans le temps. Le quatrième mode de réalisation est en particulier adapté pour l'exploitation de l'énergie cinétique de l'eau dans une rivière.

Dans les différents modes de réalisation on n'a ni décrit ni représenté les paliers et autres supports nécessaires pour guider les trois rotors dans leur rotation respective. Typiquement, dans les applications éoliennes, l'axe X est vertical et correspond à l'axe vertical d'un mât au sommet duquel le dispositif est installé. Le stator est typiquement fixé au mât.

Bien sûr, l'invention n'est pas limitée aux exemples qui viennent d'être décrits et de nombreux aménagements peuvent être apportés à ces exemples sans sortir du cadre de l'invention.

En particulier les différentes caractéristiques, formes et variantes de réalisation de l'invention peuvent être associées les unes avec les autres selon diverses combinaisons dans la mesure où elles ne sont pas incompatibles ou exclusives les unes des autres.

## Revendications

1. Dispositif de conversion de l'énergie cinétique d'un fluide en énergie mécanique de rotation par un rotor moteur (102) ayant un axe de rotation (X) transversal à une direction d'écoulement du fluide, et des pales motrices (106) recevant l'action du fluide, **caractérisé en ce qu'**il comporte en outre :
- un rotor régulateur (103) pour la régulation de la puissance par un effet d'interaction dynamique entre le fluide entraînant le rotor moteur et le fluide entraîné par le rotor régulateur, le rotor régulateur (103) régulant la puissance captée par le rotor moteur (102), et étant placé à l'intérieur du rotor moteur (102), le rotor régulateur (103) présentant des pales régulatrices (107) interagissant avec le fluide,
- un rotor de commande (104) placé à une extrémité axiale du rotor moteur (102) et lié en rotation au rotor régulateur (103) pour entraîner le rotor régulateur (103) en rotation en sens inverse du rotor moteur (102), le rotor régulateur (103) et le rotor de commande (104) étant coaxiaux au rotor moteur (102).

2. Dispositif selon la revendication 1, **caractérisé en ce que** le rotor moteur (102) comporte des espaces inter-pales qui sont en communication de fluide avec des espaces inter-pales du rotor régulateur (103).

3. Dispositif selon la revendication 1 ou 2, **caractérisée en ce que** les rotors (102, 103, 104) ont une forme sensiblement cylindrique.

4. Dispositif selon l'une des revendications 1 à 3, **caractérisée en ce que** les pales motrices (106) et les pales régulatrices (107), ont une première courbure opposée à une deuxième courbure présentée par des pales de commande (108) du rotor de commande (104).

5. Dispositif selon l'une des revendications 1 à 4, **caractérisée en ce que** les pales motrices (106) et les pales régulatrices (107) sont inclinées dans un même sens par rapport à l'axe de rotation (X), cette inclinaison étant appréciée en regardant chaque pale depuis l'extérieur du dispositif suivant un rayon coupant la pale.

6. Dispositif selon l'une des revendications 1 à 5, **caractérisé en ce que** l'axe de rotation (X) est vertical pour la captation d'un écoulement sensiblement horizontal.

7. Dispositif selon l'une des revendications 1 à 6, **caractérisé en ce qu'**il comporte un générateur asynchrone (109) entraîné en rotation par le rotor moteur (102) pour convertir l'énergie mécanique de rotation en énergie électrique.

8. Dispositif selon l'une des revendications 1 à 7, **caractérisé en ce que** le fluide est de l'eau ou de l'air.

9. Dispositif selon l'une des revendications 1 à 8, **caractérisé en ce que** les rotors (102, 103, 104) sont placés dans un stator (105) comportant au moins une première bouche d'entrée (111, 213) et au moins une bouche de sortie (111, 213, 422).

10. Dispositif selon la revendication 9, **caractérisé en ce que** le pourtour du stator (105) comporte plusieurs bouches (111, 213, 214) étant d'entrée ou de sortie en fonction de la direction d'écoulement du fluide.

11. Dispositif selon la revendication 9, **caractérisé en ce que** la bouche de sortie (111, 213, 422) est de section constante ou de section croissante dans le sens axifuge.

12. Dispositif selon l'une des revendications 9 à 11, **caractérisé en ce que** la première bouche d'entrée (111, 213) est de section croissante dans le sens axifuge.

13. Dispositif selon l'une des revendications 9 à 12, **caractérisé en ce que** le stator (105) comporte au moins un cache (112) permettant d'occulter une partie du rotor moteur (102) et/ou du rotor de commande (104) dans la bouche d'entrée.

14. Dispositif selon l'une des revendications 9 à 13, **caractérisé en ce que** le stator (105) comporte une deuxième bouche d'entrée (214) placée en arrière de la première bouche d'entrée (213) relativement au sens de rotation du rotor moteur (102).

15. Dispositif selon la revendication 14, **caractérisé en ce que** la première bouche d'entrée (213) et la deuxième bouche d'entrée (214) comprennent respectivement une première aube arrière (216) et une deuxième aube arrière (217) relativement au sens de rotation du rotor moteur (102), les première et deuxième aubes arrière (216, 217) comportant respectivement un premier déflecteur (218) et un deuxième déflecteur (219) à leur extrémité adjacente au rotor moteur (102), les premier et deuxième déflecteurs (218, 219) réduisant la section des respectivement première et deuxième bouche d'entrée dans le sens axipète.
